# EUROPÄISCHE PATENTSCHRIFT

(11) **EP 2 926 976 B1**
(45) Veröffentlichungstag und Bekanntmachung des Hinweises auf die Patenterteilung: **29.06.2016**
(21) Anmeldenummer: 14163146.5
(22) Anmeldetag: 02.04.2014
(51) Int. Cl.: B29C 65/02, B29C 65/78, B65B 51/26, B65B 57/04, B65B 51/16

(54) **VERFAHREN ZUM VERSCHWEIßEN EINER VERPACKUNG UND VERPACKUNGSMASCHINE**
METHOD FOR WELDING A PACKAGING AND PACKAGING MACHINE
PROCÉDÉ DE SOUDAGE D'UN EMBALLAGE ET MACHINE D'EMBALLAGE

(43) Veröffentlichungstag der Anmeldung: 07.10.2015
(73) Patentinhaber: SICK AG, 79183 Waldkirch (DE)
(72) Erfinder: Hirt, Günter, 77790 Steinach (DE); Hauptmann, Axel, 79183 Waldkirch (DE)
(74) Vertreter: Ludewigt, Christoph

(56) Entgegenhaltungen:
- EP-A1- 0 552 907
- EP-A1- 1 468 914
- DE-A1-102011 075 378
- DE-A1-102011 076 922
- JP-A- S59 230 727
- JP-A- S59 230 728

## Beschreibung

Die Erfindung betrifft ein Verfahren zum Verschweißen einer Verpackung für ein Objekt und eine entsprechende Verpackungsmaschine gemäß den Oberbegriffen der Ansprüche 1 und 5.

Insbesondere in der Lebensmittelindustrie müssen einzelne Objekte, z. B. Schokoriegel, Müsliriegel oder ähnliche Objekte, in Folie verpackt bzw. eingeschweißt werden. Die Verschweißung muss korrekt und luftdicht sein, damit das Lebensmittel nicht verdirbt. Solche Verpackungen werden in einer Verpackungsmaschine aus einer aufgerollten Folienbahn zu einem Schlauch geformt, der mit einer Längssiegelnaht längsseitig geschossen wird. In einer Quersiegelstation werden die verpackten Objekte vereinzelt. Die Verschweißung der Nähte wird über Druck und/oder Temperatur durchgeführt. Die vorliegende Erfindung betrifft im Wesentlichen die Längssiegelnaht oder besser die Steuerung und Kontrolle der korrekten Verschweißung der Längssiegelnaht.

Bei der Verschweißung der Längssiegelnaht können verschiedene Fehlerbilder auftreten. Von den zu verschweißenden Folienrandbereichen können einer oder beide "weglaufen", so dass die Längskanten nicht mehr sauber und korrekt überlappend verschweißt werden. Im schlimmsten Fall erfolgt gar keine Verschweißung, weil durch das "Weglaufen" keine Überlappung mehr vorhanden ist. Dieses "Weglaufen" kann unterschiedliche Ursachen haben, von denen nur einige beispielhaft aufgelistet sind:
- unterschiedliche Spannungen in der Folie,
- falsches "Eintakten" der Objekte, also wenn die Objekte in den aus der Folie geformten Schlauch nicht korrekt eingeschossen werden,
- wenn die Objekte stellenweise zu große Dimensionen aufweisen, z. B. zu hoch sind, weil ein Gussaufsatz stehengeblieben ist,
- durch Verschmutzungen oder Krümel, die den Folienverlauf stören,
- ungenaues Spleißen, also Folienanfang und Folienende gegeneinander versetzt sind.

Tritt ein solcher Fehler auf und wird nicht bemerkt, kommt es in der Regel zu größeren Störungen. Verpackungen können platzen oder Riegel werden unkontrolliert in die Maschine und nicht kontrolliert in die Folie eingeschossen. Ein folgender Not-Stopp der Verpackungsmaschine geht deshalb meist mit größeren Verschmutzungen, einer aufwändigen Reinigung und entsprechend langer Stillstandszeit einher.

Da der Verpackungsprozess mit Bildung einer Längssiegelnaht grundsätzlich stabil ist wurde bisher lediglich eine visuelle Kontrolle in Zeitabständen vorgenommen. Eine visuelle Kontrolle hat den Nachteil, dass sie nur zu einzelnen Zeitpunkten und nicht permanent erfolgt. Ein oben beschriebener Not-Stopp kann nur dann vermieden werden, wenn zufällig zu dem Zeitpunkt eine visuelle Kontrolle erfolgt, wenn die Längskanten weglaufen. Ein weiterer Nachteil ist, dass ein langsames Weglaufen nicht rechtzeitig erkannt werden kann und es daher vorkommen kann, dass vor einem Not-Stopp noch zahlreiche Verpackungen hergestellt werden, diese aber eine qualitativ schlechte Siegelnaht aufweisen oder sogar undicht sind.

Aus der DE 10 2011 076 922 A1 ist ein gattungsgemäßes Verfahren und eine entsprechende Verpackungsmaschine bekannt.

Weitere Verfahren und Maschinen dieser Art sind aus EP 0 552 907 A1, JP S59 230727 A, JP S59 230728 A, DE 10 2011 075 378 A1 und EP 1 468 914 A1 bekannt.

Es besteht daher Bedarf den Verpackungsablauf effizienter mit noch weniger Stillstandzeiten auszuführen und qualitativ hochwertigere Längssiegelnähte zu erstellen.

Diese Aufgabe wird gelöst durch ein Verfahren nach Anspruch 1 und eine Verpackungsmaschine nach Anspruch 5.

Das erfindungsgemäße Verfahren zum Verschweißen einer Verpackung für in Förderrichtung geförderte Objekte umfasst die Schritte:
- Bereitstellen einer Folienbahn mit einer Innenseite, einer Außenseite und Randbereichen entlang beider Längskanten,
- Fördern des Objekts in Förderrichtung,
- Zuführen der Folienbahn,
- Umhüllen des Objekts mit der Folie in einer Folienbahnumformstation während des Förderns, so dass die Randbereiche mit ihren Innenseiten aneinander liegen,
- Verschweißen der aneinanderliegenden Randbereichsinnenseiten in einer Schweißstation
- permanentes Kontrollieren der korrekten Position der Längskanten mittels wenigstens eines optischen Sensors, wenn die Randbereichsinnenseiten aneinanderliegen oder verschweißt sind
wobei der Sensor eine Lichtzeile erzeugt und einen Intensitätsverlauf von reflektiertem Licht über die Zeile detektiert und anhand von Stufen im Intensitätsverlauf die Kontrolle der Positionen beider Längskanten gleichzeitig erfolgt.

Mit dem erfindungsgemäßen Verfahren ist es möglich, gänzlich auf die visuelle Kontrolle zu verzichten und somit nicht nur zu bestimmten Zeitpunkten, sondern dauerhaft die korrekte Verschweißung der Längssiegelnaht zu kontrollieren. Ein "Weglaufen" einer Kante kann sofort erkannt werden bevor eine undichte Verschweißung vorgenommen würde. Das eröffnet auch die Möglichkeit einer Regelung, also einer Korrektur der Längskantenposition mittels geeigneter Maschinenparameter, z. B. Folienbahnposition oder dgl.. Weiter können Parameter, die mit dem Sensor beobachtbar sind, gespeichert werden, um mit den gespeicherten Werten im Nachhinein eine Analyse des Prozesses vornehmen zu können.

In vorteilhafter Weise ist der Sensor als Zeilensensor ausgebildet, so dass die Position der Längsseiten dadurch kontrolliert wird, dass ein Teil der Lichtzeile den Randbereich trifft und der Sensor die Ausdehnung des getroffenen Teils erkennen kann. Damit kann über einen vergleichsweise großen Bereich eine Beobachtung der Längskante erfolgen.

Wenn in Weiterbildung eine oder beide Längskantenpositionen über einen bestimmten Zeitraum gespeichert werden und die aktuelle Position mit einer gespeicherten Position verglichen wird, kann damit der zeitliche Verlauf der Längskantenposition verfolgt werden, so dass schneller und frühzeitiger ein "Weglaufen" erkannt werden kann.

Die erfindungsgemäße Verpackungsmaschine, mit der das genannte Verfahren durchführbar ist, umfasst:
- eine Folienbahn mit einer Innenseite, einer Außenseite und Randbereichen entlang beider Längskanten der Folienbahn,
- eine Fördereinrichtung zur Förderung des Objekts in Förderrichtung,
- eine Zuführeinrichtung zum Zuführen der Folienbahn,
- eine Folienbahnumformstation zum Umformen der Folie um das Objekt herum während des Förderns, so dass das Objekt umhüllt ist und die Randbereiche mit ihren Innenseiten aneinander liegen,
- eine Schweißstation zum Verschweißen der aneinanderliegenden Randbereichsinnenseiten,
- eine Längskantenpositionskontrolleinrichtung, die wenigstens einen optischen Sensor aufweist, mit dem die korrekte Position der Längskanten permanent kontrollierbar ist,
wobei der Sensor ein Zeilensensor ist und als Lichttaster oder Reflexlichttaster ausgebildet ist und einen Intensitätsverlauf von reflektiertem Licht über die Zeile detektiert und anhand von StuTen im Intensitätsverlauf die permanente Kontrolle der Positionen beider Längskanten gleichzeitig erfolgt.

In Weiterbildung der Erfindung weist die Längskantenpositionskontrolleinrichtung nicht nur einen sondern zwei optische Sensoren aufweist, wobei jeder der Sensoren je eine der beiden Längskanten während des Zuführens und Umlegens der Folienbahn erfasst. Damit wird erfolgt die Kontrolle der Position der Längskanten bereits vor dem Verschweißen. Das ist vorteilhaft, denn dann ist sichergestellt, dass die Längskanten der Schweißstation immer korrekt zugeführt werden und immer eine korrekte Verschweißung erfolgt.

Alternativ oder auch zusätzlich kann ein optischer Sensor die Position der Längskanten in oder nach der Schweißstation erfassen, wenn also die Randbereichsinnenseiten aneinander liegen oder verschweißt sind. Da die Längssiegelnähte häufig eine gewisse Breite haben und gegenüber einer nicht perfekten Überlappung tolerant sind, kann es ausreichen, die Position der Längskanten beim oder nach dem Verschweißen zu kontrollieren und wenn eine oder beide Kanten "weglaufen" eine Korrektur vorzunehmen.

Vorteilhafterweise ist der optische Sensor als Zeilensensor ausgebildet, insbesondere als Lichttaster oder Reflexlichttaster, wobei die Ausbildung als Reflexlichttaster insbesondere für transparentes Folienmaterial vorteilhaft ist.

Im Folgenden wird die Erfindung anhand von Ausführungsbeispielen unter Bezugnahme auf die Zeichnung im Einzelnen erläutert. In der Zeichnung zeigen:
- Fig. 1 und 2: stark schematische Ansichten von wesentlichen Teilen einer erfindungsgemäßen Verpackungsmaschine, einmal von der Seite (Fig. 1) und von unten (Fig. 2);
- Fig. 3: eine schematische Schnittansicht entlang der Linie III-III aus Fig. 1 und 2;
- Fig. 4: eine schematische Schnittansicht entlang der Linie IV-IV aus Fig. 1 und 2;
- Fig. 5 bis 8: schematische Ansichten entlang der Linie V-V verschiedener Ausführungsformen und in verschiedenen Verpackungssituationen;
- Fig. 9: eine schematische Ansicht einer Anordnungsmöglichkeit optischer Sensoren.

Eine erfindungsgemäße Verpackungsmaschine 10 weist eine Fördereinrichtung 12 auf, auf der Objekte 14 in Förderrichtung z gefördert werden. Die Objekte 14 sind typischerweise Schokoriegel oder dergleichen Lebensmittel, die als länglicher Riegel ausgebildet sind und in der Verpackungsmaschine in eine Verpackung 16 verpackt werden sollen. Die Verpackung 16 wird aus einer Folie in der Verpackungsmaschine 10 hergestellt. Die Folie ist als Folienbahn 18 von einer Rolle 20 abrollbar. Die Folienbahn 18 weist eine Innenseite 18-1, eine Außenseite 18-2 und Randbereiche 18-3 und 18-4 entlang beider Längskanten 18-5 und 18-6 auf.

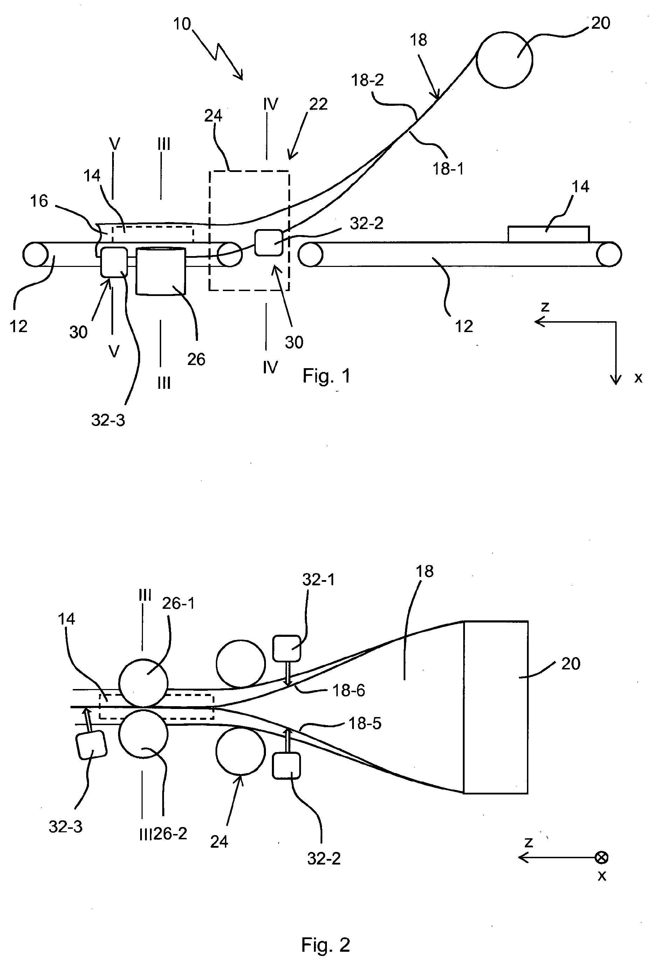

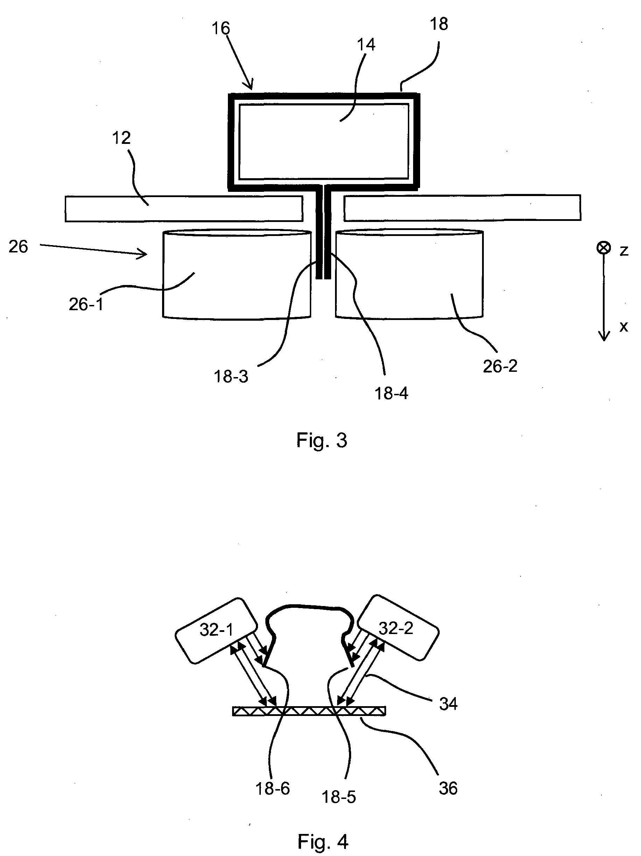

Über eine nicht näher dargestellte Zuführeinrichtung 22 wird die Folienbahn 18 zugeführt und in einer ebenfalls nicht im Detail sondern nur durch gestrichelte Linien angedeuteten Folienbahnumformstation 24 umgeformt. Die Umformung erfolgt so, dass die Folienbahn 18 während des Förderns des Objektes 14 um dieses herum gelegt wird, so dass das Objekt 14 umhüllt ist. Dabei wird das Objekt 14 quer zur Längsrichtung (z-Richtung) mit der Folie 18 ummantelt, wobei die Randbereiche 18-3 und 18-4 mit ihren Innenseiten zur gegenseitigen Anlage kommen. Der Vorgang des Umformens der Folie soll in Fig. 2 dargestellt sein, die dafür eine Ansicht von unten auf relevante Teile der Verpackungsmaschine darstellen soll. Das mit der Folie 18 umhüllte Objekt ist deutlich in Fig. 3 zu erkennen.

In einer anschließenden Schweißstation 26 werden die aneinanderliegenden Randbereiche 18-3 und 18-4 auf ihren Innenseiten 18-1 miteinander verschweißt. Dies geschieht durch Anwendung von Druck und/oder Temperatur durch beispielsweise zwei Rollen 26-1 und 26-2 (Fig. 3).

Schließlich werden die bis hierhin in einer schlauchartigen Verpackung eingepackten Objekte 14 in einer nicht dargestellten Quersiegelstation quer zur Längsrichtung versiegelt und vereinzelt.

Die Erfindung betrifft jetzt die Kontrolle der korrekten Positionen der Längskanten 18-5 und 18-6. Dazu weist die Verpackungsmaschine 10 eine Längskantenpositionskontrolleinrichtung 30 auf mit wenigstens einem optischen Sensor 32-1, mit dem die korrekte Position der Längskanten 18-5 und 18-6 permanent kontrollierbar ist.

In einem ersten Ausführungsbeispiel (Fig. 1 und 4) ist die Längskantenpositionskontrolleinrichtung 30 ein Element der Zuführeinrichtung 22 und weist zwei der optischen Sensoren auf, nämlich Sensor 32-1 und Sensor 32-2, mit denen die Längskante 18-5 bzw. die Längskante 18-6 optisch erfasst werden.

Dabei sind die Sensoren 32-1 und 32-2 als Zeilensensoren ausgebildet, die jeweils eine Lichtzeile in Richtung auf die und quer zur zugeordneten Längskante aussenden. In Fig. 4 ist dies durch Pfeile 34 verdeutlicht. Die Sensoren 32-1 und 32-2 sind als Reflexlichttaster ausgebildet und auf einen Retroreflektor 36 gerichtet. Je nach vom Reflektor 36 reflektiertem Anteil der Lichtzeile kann auf die Lage der jeweiligen Längskante 18-5 bzw. 18-6 geschlossen werden.

Weicht die so bestimmte Position einer Längskante während des Verpackungsprozesses von seiner Soll-Lage ab, kann ein Signal ausgegeben werden, das als Regelgröße der Zuführeinrichtung 22 oder der Folienbahnumformstation 24 zugeführt werden kann, um die falsche Position zu korrigieren oder das einfach als Warnsignal an einen Bediener ausgegeben werden kann.

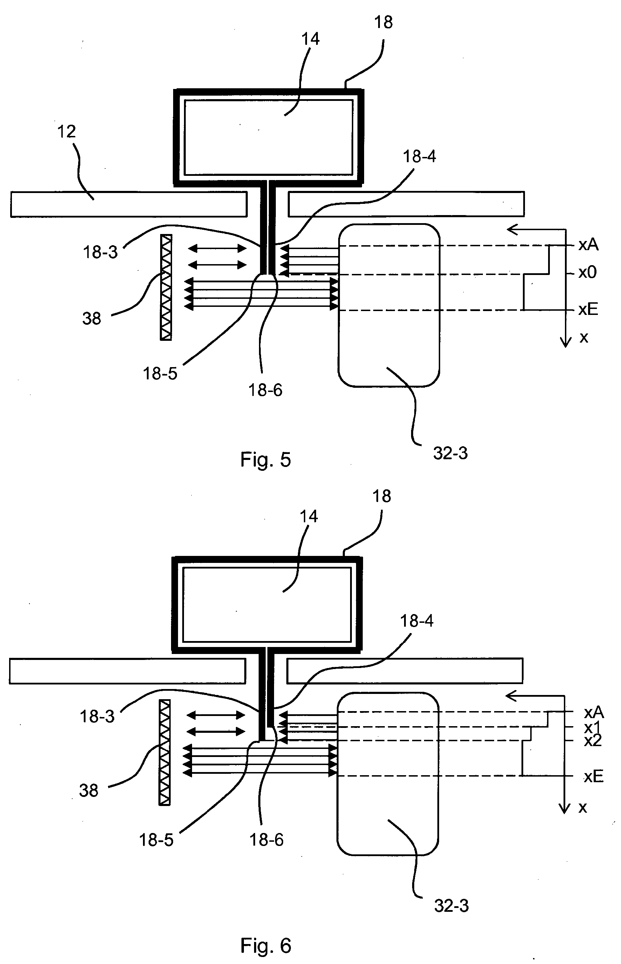

In weiterer Ausführungsform kann alternativ oder auch zusätzlich zu den Sensoren 32-1 und 32-2 wenigstens ein optischer Sensor 32-3 die Position der Längskanten in oder nach der Schweißstation 26 erfassen, wenn also die Randbereichsinnenseiten 18-3 und 18-4 aneinanderliegen oder verschweißt sind. Dies ist in der Übersicht in Fig. 1 und näher in den Fig. 5 bis 9 dargestellt.

In dem Ausführungsbeispiel nach Fig. 5 und 6 ist der Sensor 32-3 wiederum als Reflexlichttaster mit einem Reflektor 38 ausgebildet, wobei in diesem Ausführungsbeispiel die Folie 18 transparent ausgebildet ist. Bei korrekter Position der Längskanten 18-5 und 18-6 erkennt der Sensor 32-3 einen Intensitätsverlauf über die Sensorzeile, wie er in dem in Fig. 5 eingebetteten Diagramm erkennbar ist. Das heißt, bei freier Sicht auf den Reflektor 38 ergäbe sich ein konstanter Lichtempfang über die Zeile, die sich von xA bis xE erstreckt. Wenn die transparenten Folienrandbereiche 18-3 und 18-4 in den Strahlengang hineinragen, wird ein Teil des Lichts durch das Folienmaterial absorbiert. "Transparent" soll hier also heißen, dass das Folienmaterial zwar Licht durchlässt aber in der Realität einen Teil dennoch absorbiert. Es ergibt sich dann der in Fig. 5 dargestellte Signalverlauf mit einer Stufe bei x0.

Beginnt nun die Längskante 18-6 "wegzulaufen", wird die Transmission anders sein und es wird sich ein Signalverlauf gemäß dem Diagramm in Fig. 6 ergeben. Es werden zwei Stufen x1 und x2 auftreten. Also ein Bereich von xA bis x1, in dem die Folienrandbereiche 18-3 und 18-4 noch überlappen, einen Bereich von x1 bis x2, in dem nur ein Folienrandbereich 18-3 im Strahlengang ist und ein Bereich x2 bis xE, der frei ist.

Bei entsprechender Überschreitung von Toleranzwerten kann wie im ersten Ausführungsbeispiel ein Signal ausgegeben werden.

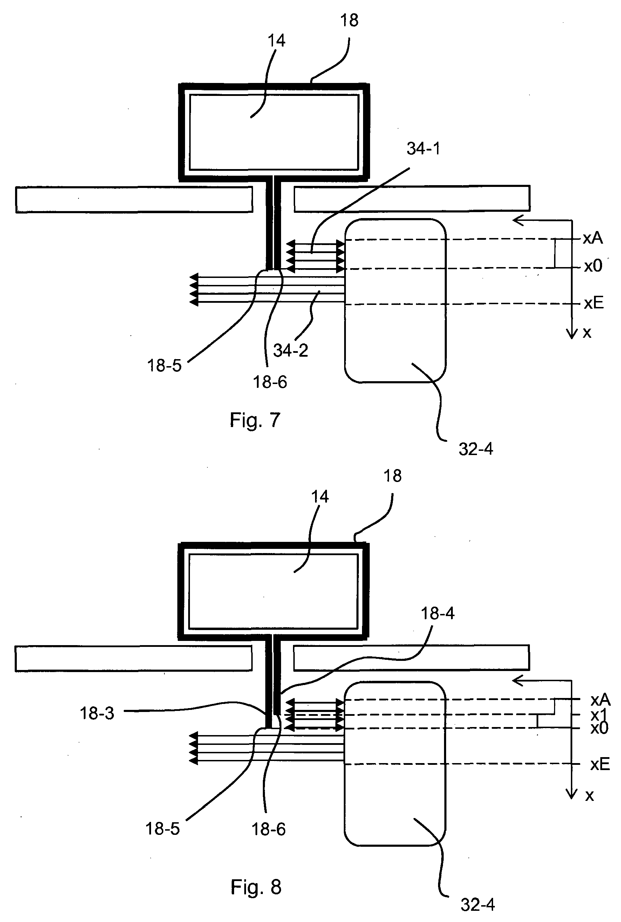

In dem Ausführungsbeispiel nach Fig. 7 und 8 ist anstelle des Sensors 32-3 nicht ein Reflexlichttaster eingesetzt, sondern ein "normaler" Lichttaster 32-4, der ohne Reflektor arbeitet. Das ist sinnvoll, wenn das Folienmaterial nicht transparent ist. Dies ist ein häufiger Anwendungsfall, denn zumeist ist das Folienmaterial 18 für solche Objekte 14, wie Schokoriegel, auf der Folienaussenseite farblich bedruckt. Die Folieninnenseite ist häufig weiß oder wenn Aluminium in der Folie enthalten ist, spiegelnd.

Für eine solche Folie 18 ergäbe sich die in den Fig. 7 und 8 dargestellten Situationen. Wenn die Längskanten 18-5 und 18-6 korrekt übereinanderliegen ergibt sich ein Signalverlauf, wie in Fig. 7 dargestellt. Im Bereich von xA bis x0 ergibt sich eine Reflektion, denn in diesem Bereich remittiert die Folienaussenseite das Licht der Lichtzeile, das auf diesen Bereich fällt, wie durch Pfeile 34-1 dargestellt. In dem Bereich x0 bis xE ergibt sich kein Signal, denn dort erfolgt keine Remission, da die Lichtstrahlen 34-2 "ins Leere gehen".

Wenn die Längskanten 18-5 und 18-6 jetzt nicht korrekt übereinanderliegen, wie in Fig. 8 dargestellt, ergibt sich ein anderer Signalverlauf. Im Bereich x0 bis xE ergibt sich zwar wiederum kein Signal, da dort, wie bei korrekter Position der Längskanten, keine Remission erfolgt. Aber im Bereich von xA bis x0 ergibt sich ein anderer Verlauf. Dort wird ein Intensitätssprung bei x1 auftreten, da zwischen xA und x1 eine Remission der Folienaussenseite erfasst wird, und zwischen x1 und x0 aber eine Remission der Folieninnenseite des Folienrandbereichs 18-3. Folieninnenseite und Folienaussenseite sind in fast allen Anwendungen sehr unterschiedlich, wie oben beschrieben.

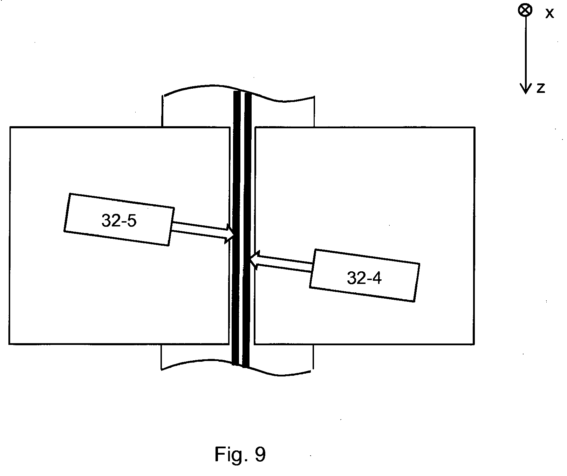

Da in der Anordnung des Sensors 32-4 nach den Fig. 7 und 8 nur die Fehlersituation nach Fig. 8 erkannt werden kann, also wenn der Folienrandbereich 18-3 länger ist bzw. weiter in x-Richtung vorsteht als der Folienrandbereich 18-4 und es somit nicht erkannt werden kann, wenn andersherum der Folienrandbereich 18-4 weiter in x-Richtung vorstehen würde als der Folienrandbereich 18-3, ist es sinnvoll einen gleichen Sensor 32-5 auf der anderen Seite anzuordnen. Dies ist in Fig. 9 dargestellt. Dann kann sowohl die eine als auch die andere Situation von den Sensoren der Längskantenpositionskontrolleinrichtung 30 erkannt werden.

## Patentansprüche

1. Verfahren zum Verschweißen einer Verpackung für ein Objekt, das in eine Förderrichtung gefördert wird, mit den Schritten:
- Bereitstellen einer Folienbahn mit einer Innenseite, einer Außenseite und Randbereichen entlang beider Längskanten,
- Fördern des Objekts in Förderrichtung,
- Zuführen der Folienbahn,
- Umhüllen des Objekts mit der Folie in einer Folienbahnumformstation während des Förderns, so dass die Randbereiche mit ihren Innenseiten aneinanderliegen,
- Verschweißen der aneinanderliegenden Randbereichsinnenseiten in einer Schweißstation,
- permanentes Kontrollieren der korrekten Position der Längskanten mittels wenigstens eines optischen Sensors, wenn die Randbereichsinnenseiten aneinanderliegen oder verschweißt sind,
**dadurch gekennzeichnet,**
**dass** der Sensor eine Lichtzeile erzeugt und einen Intensitätsverlauf von reflektiertem Licht über die Zeile detektiert und dass anhand von Stufen im Intensitätsverlauf die Kontrolle der Positionen beider Längskanten gleichzeitig erfolgt.

2. Verfahren nach Anspruch 1, **dadurch gekennzeichnet, dass** der Sensor eine Lichtzeile erzeugt und die Position der Längsseiten dadurch kontrolliert wird, dass ein Teil der Lichtzeile den Randbereich trifft und der Sensor die Ausdehnung des getroffenen Teils erkennen kann.

3. Verfahren nach einem der vorhergehenden Ansprüche, **dadurch gekennzeichnet, dass** eine oder beide Längskantenpositionen über einen bestimmten Zeitraum gespeichert werden und die aktuelle Position mit einer gespeicherten Position verglichen wird.

4. Verfahren nach einem der vorhergehenden Ansprüche, **dadurch gekennzeichnet, dass** die Lichtzeile an einem Reflektor reflektiert wird, wobei die Längskanten zwischen Sensor und Reflektor liegen.

5. Verpackungsmaschine zur Durchführung eines Verfahrens nach einem der vorhergehenden Ansprüche zur Verpackung eines Objekts, das in eine Förderrichtung gefördert wird, mit:
- einer Folienbahn mit einer Innenseite, einer Außenseite und Randbereichen entlang beider Längskanten der Folienbahn,
- einer Fördereinrichtung zur Förderung des Objekts in Förderrichtung,
- einer Zuführeinrichtung zum Zuführen der Folienbahn,
- einer Folienbahnumformstation zum Umformen der Folie um das Objekt herum während des Förderns, so dass das Objekt umhüllt ist und die Randbereiche mit ihren Innenseiten aneinanderliegen,
- einer Schweißstation zum Verschweißen der aneinanderliegenden Randbereichsinnenseiten,
- einer Längskantenpositionskontrolleinrichtung, die wenigstens einen optischen Sensor aufweist, mit dem die korrekte Position der Längskanten permanent kontrollierbar ist,
dadurch gekenneichnet, dass der Sensor ein Zeilensensor ist und als Lichttaster oder Reflexlichttaster ausgebildet ist und einen Intensitätsverlauf von reflektiertem Licht über die Zeile detektiert und anhand von Stufen im Intensitätsverlauf die permanente Kontrolle der Positionen beider Längskanten gleichzeitig erfolgt.

## Claims

1. A method of welding a packaging for an object that is conveyed in a conveying direction, the method comprising the steps of:
- providing a film web having an inner side, an outer side and boundary regions along both longitudinal edges;
- conveying the object in the conveying direction;
- supplying the film web;
- enveloping the object with the film in a film web forming station during the conveying in such a way that the boundary regions contact one another with their inners sides;
- welding the inner sides of the boundary regions that contact one another in a welding station;
- permanently controlling the correct position of the longitudinal edges by means of at least one optical sensor when the inner sides of the boundary regions contact one another or are welded together, **characterized in that**
the sensor generates a line of light and an intensity progression of reflected light is detected via the line and **in that** the control of the positions of both longitudinal edges takes place simultaneously by means of steps in the intensity progression.

2. A method in accordance with claim 1, **characterized in that** the sensor generates a line of light and the position of the longitudinal edges is controlled thereby that a part of the line of light is incident at the boundary region and the sensor can recognize the extent of the struck part.

3. A method in accordance with one of the preceding claims, **characterized in that** one or both of the longitudinal edge positions can be stored for a certain period of time and the actual position can be compared with a stored position.

4. A method in accordance with any one of the preceding claims, **characterized in that** the line of light is reflected at a reflector, wherein the longitudinal edges lie between the sensor and the reflector.

5. A packaging machine for carrying out a method in accordance with any one of the preceding claims for packaging an object that is conveyed in a conveying direction, comprising:
- a film web having an inner side, an outer side and boundary regions along both longitudinal edges of the film web;
- a conveying device for conveying the object in the conveying direction;
- a supply device for supplying the film web;
- a film web forming station for reshaping the film around the object during the conveying in such a way that the object is enveloped and the boundary regions contact one another with their inners sides;
- a welding station for welding the inner sides of the boundary regions that contact one another;
- a longitudinal edge position control device that has at least one optical sensor by means of which the correct positioning of the longitudinal edges can be permanently controlled,
**characterized in that**
the sensor is a line sensor and is configured as a light scanner or as a reflected light scanner and detects an intensity progression of reflected light via the line and the permanent control of the positions of both longitudinal edges takes place simultaneously by means of steps in the intensity progression.

## Revendications

1. Procédé pour le soudage d'un emballage pour un objet qui est convoyé dans une direction de convoyage, comprenant les étapes consistant à :
- préparer une nappe de film avec une face intérieure, une face extérieure et des zones de bordure le long des deux arêtes longitudinales,
- convoyer l'objet en direction de convoyage,
- amener la nappe de film,
- envelopper l'objet avec le film dans une station de mise en forme de nappe de film pendant le convoyage, de sorte que les zones de bordure se recouvrent avec leurs faces intérieures,
- souder les faces intérieures en recouvrement des zones de bordure dans une station de soudage,
- contrôler en permanence la position correcte des arêtes longitudinales au moyen d'au moins un capteur optique, quand les faces intérieures des zones de bordure sont en recouvrement ou sont soudées, **caractérisé en ce que**
le capteur engendre une ligne de lumière et on détecte une évolution de l'intensité de la lumière réfléchie sur la ligne, et **en ce que** le contrôle des positions des deux arêtes longitudinales a lieu simultanément au moyen de gradins dans l'évolution d'intensité.

2. Procédé selon la revendication 1, **caractérisé en ce que** le capteur engendre une ligne de lumière et la position des côtés longitudinaux est contrôlée du fait qu'une partie de la ligne de lumière atteint la zone de bordure et que le capteur est capable de reconnaître l'extension de la partie atteinte.

3. Procédé selon l'une des revendications précédentes, **caractérisé en ce que** les positions d'une arête longitudinale ou des deux sont mémorisées sur une période temporelle déterminée, et la position actuelle est comparée avec une position mémorisée.

4. Procédé selon l'une des revendications précédentes, **caractérisé en ce que** la ligne de lumière est réfléchie sur un réflecteur, et les arêtes longitudinales sont situées entre le capteur et le réflecteur.

5. Machine d'emballage pour la mise en oeuvre d'un procédé selon l'une des revendications précédentes pour l'emballage d'un objet qui est convoyé dans une direction de convoyage, comprenant :
- une nappe de film avec une face intérieure, une face extérieure et des zones de bordure le long des deux arêtes longitudinales de la nappe de film,
- un dispositif de convoyage pour convoyer l'objet en direction de convoyage,
- un dispositif d'amenée pour amener la nappe de film,
- une station de mise en forme de nappe de film pour mettre en forme le film tout autour de l'objet pendant le convoyage, de sorte que l'objet est enveloppé et que les zones de bordure se recouvrent avec leurs faces intérieures,
- une station de soudage pour souder les faces intérieures en recouvrement des zones de bordure,
- un dispositif de contrôle de position des arêtes longitudinales, qui comprend au moins un capteur optique avec lequel la position correcte des arêtes longitudinales est susceptible d'être contrôlée en permanence,
**caractérisée en ce que** le capteur est un capteur en ligne et est réalisé sous forme de détecteur de lumière ou de détecteur de lumière à réflexion, et détecte une évolution de l'intensité de la lumière réfléchie sur la ligne, et le contrôle permanent des positions des deux arêtes longitudinales a lieu simultanément au moyen de gradins dans l'évolution de l'intensité.
